# EUROPEAN PATENT SPECIFICATION

(11) **EP 2 442 632 B1**
(45) Date of publication and mention of the grant of the patent: **24.04.2019**
(21) Application number: 10789823.1
(22) Date of filing: 16.06.2010
(51) Int. Cl.: A01B 19/02, A01B 35/06, A01B 35/24, A01B 23/02, A01B 35/22

(54) **AGRICULTURAL MACHINE DEVICE**
LANDMASCHINE
DISPOSITIF DE MACHINE AGRICOLE

(30) Priority: 16.06.2009 SE 0900819
(43) Date of publication of application: 25.04.2012
(73) Proprietor: Väderstad Holding AB, 590 21 Väderstad (SE)
(72) Inventor: ANDERSSON, Leif, S-387 93 Borgholm (SE); INGEMARSSON, Marcus, S-592 91 Vadstena (SE)
(74) Representative: Groth & Co. KB
(86) International application number: PCT/SE2010/050673
(87) International publication number: WO 2010/147545

(56) References cited:
- EP-A2- 1 285 561
- DE-C- 159 815
- DE-U1- 8 901 351
- FR-A- 1 044 179
- FR-A- 1 139 024
- GB-A- 927 594
- GB-A- 1 172 890
- US-A- 2 141 830
- US-A- 2 385 950
- US-A- 2 503 532
- US-A- 2 727 452
- US-A- 3 976 145
- US-A- 4 178 999

## Description

The invention relates to an agricultural machine device according to the preamble of claim 1.

### Background

Agricultural machines for cultivation, such as cultivators, often comprise a frame having a number of transverse beams where a number of cultivating spring tines are arranged. The springing is often solved by the tine being formed of a bent bar having a helical spring-shaped portion. Usually, there are also a coupling member for connection of a traction vehicle and some form of working depth-maintaining and consolidating member, such as support wheels and/or a field roller.

It is desirable to have a certain spacing in the lateral direction between the tines in order to get a good processing over the entire machine width. It is furthermore desirable with greater spacings between the tines to allow haulm and plant residues to pass through. This is solved by two laterally adjacent tines being displaced in the longitudinal direction. Usually, tines having the same longitudinal position are therefore mounted to a common transverse beam.

In order to decrease the number of tool-supporting beams in light cultivators, there are solutions wherein tines having different longitudinal positions are mounted to the same beam. Here, some tines are fixed to the beam by a forwardly directed fastening portion while others are fixed by a rearwardly directed fastening portion.

The latter solution gives rise to problems since the tines thereby have to be given different designs, which also gives them different spring characteristics. This results in the tines performing differently and thereby giving different work results at a given work condition. This leads to a disadvantage for the farmer since he desires an equivalent work result as seen across the entire working width of the machine.

The document FR 1.044.179 discloses a soil-working implement in an agricultural machine, which implement having four rotating tools working the soil one at a time.

Document US 2 385 950 A1 discloses a device according to preamble of claim 1. The tools as fastened to the beam using a conventional clamping plate.

### The Object of the Invention

The object of the invention is to provide an agricultural machine device that allows attachment of cultivating tines at different longitudinal positions, wherein the agricultural machine can be given a simple frame structure and wherein the above-mentioned disadvantages are avoided.

### Brief Description of the Invention

The object of the invention is solved by a device according to claim 1.

By the fact that fastening portions extend through the beam in a vertical plane each, at a first angle between the longitudinal axis of the fastening portion of a first cultivating tool and a horizontal plane that differs from a corresponding second angle of the fastening portion of a second cultivating tool, there are good prospects to adapt the length and distance from the beam of the springing portion so that the same spring characteristic at the point occurs upon loading even if the position of the springing portion in relation to the beam is varied.

The geometrical shape of the bar between the springing portion and the point is kept equal for the first front tool and the second rear tool, which gives the same movement pattern of the tools in a given work load. By further allowing the angle of the fastening portions to the beam to differ from each other, a geometrical shape of the bar is possible wherein it does not need to be bent between the springing portion and the beam. Since a certain spring action also arises at this part, it is undesired that it is bent, in particular in another direction. The outer surface of the bar, in relation to the bending radius, should from a strength point-of-view always be subjected to tensile stresses upon loading.

By the fact that the fastening portions extend through the beam, a reliable and robust fixation of the tools to the beam is possible.

If, as is defined in claim 2, the beam consists of a circular tube, a uniform attachment and locking of the tool is possible regardless of the angle position in relation to the horizontal plane, wherein the fastening portions can be inserted through preferably laser cut holes. The angular difference between the fastening portions also makes that the holes of the beam for the receipt of the same can be given different radial positions, which is favourable from a strength point-of-view.

By a solution according to claim 3, wherein the respective fastening portion has a rectangular cross-section and a surface that coincides with an axial plane of the tube through the centre thereof, a favourable force load is obtained on the tool at its attachment at the same time as a rotational securing is provided.

Claims 4 and 5 define preferred embodiments, wherein the defined angles make it possible to prevent compressive stresses at the inside radii of the bar at the same time as the springing characteristic upon the movements of the point during operation becomes essentially the same for the first and the second tool.

Claims 6, 7 and 8 define preferred geometrical relationships of the tools, wherein a large spacing between the points in the longitudinal direction of the first and the second tool is provided at the same time as the front point can be arranged near or behind the beam as seen in the working direction. This is important in order to achieve a desired movement pattern of the point. It also makes it possible to allow the front tool a large range of movement upward backward before it strikes against the beam, which is important in order to prevent the tool or beam from being damaged when the point during the work strikes against an obstacle such as a larger stone.

Finally, claim 9 defines a preferred device, wherein the tools can be locked in a simple way.

The invention is described in more detail below by a preferred embodiment, reference being made to the accompanying figures.

### List of Figures

- Figure 1: shows a view obliquely from above of an agricultural machine in the form of a cultivator.
- Figure 2: shows a detailed view of a part of the cultivator according to Figure 1.
- Figure 3: shows a schematic side view of a part of the cultivator according to Figure 1.
- Figure 4: shows an enlarged schematic view of a detail according to Figure 3.

For some details, for reasons of space and clarity, the reference numeral has been omitted in certain figures where the corresponding or identical detail is shown in the same or another figure.

### Description of an Embodiment Example

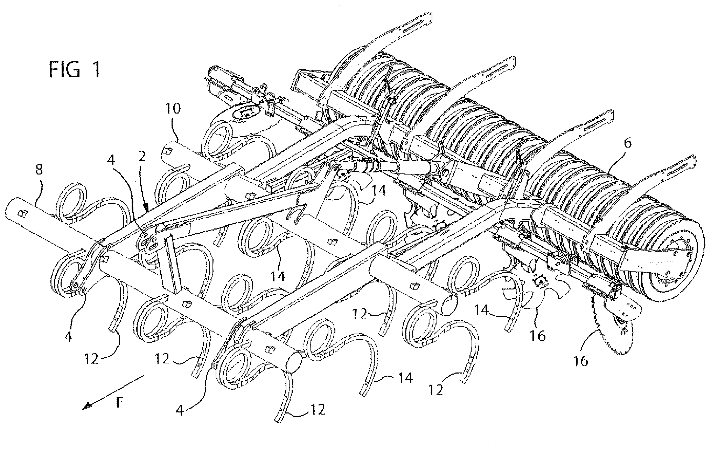

In Figure 1, there is shown an agricultural machine in the form of a cultivator. The cultivator comprises as essential parts a frame having a first front tool-supporting beam 8 in the form of a circular tube, a second rear tool-supporting beam 10 also in the form of a similar circular tube. At the front end of the frame 2, coupling points 4 are arranged, to which a traction vehicle (not shown), suitably a tractor, can be connected.

At the respective beam 8, 10, a number of first cultivating tools 12 are arranged that initially extend forward from the beam 8, 10 in the working direction of the cultivator. Furthermore, a number of second cultivating tools 14 are arranged that initially extend backward from the beam 8, 10 in the working direction of the cultivator. Behind the cultivating tools 12, 14, a number of levelling tools 16 as well as a depth-maintaining and consolidating member in the form of a field roller 6 are arranged.

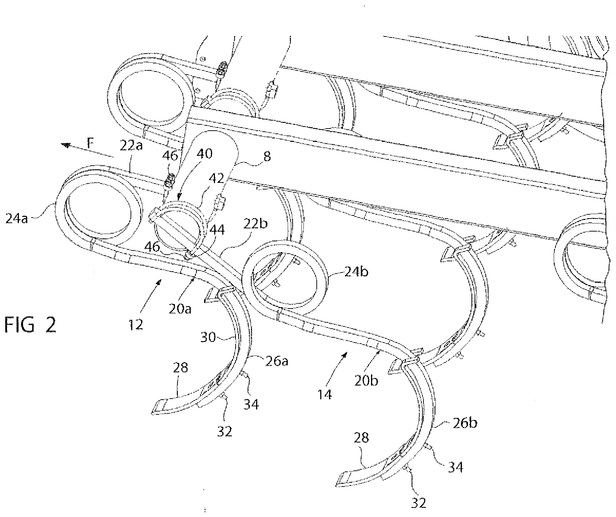

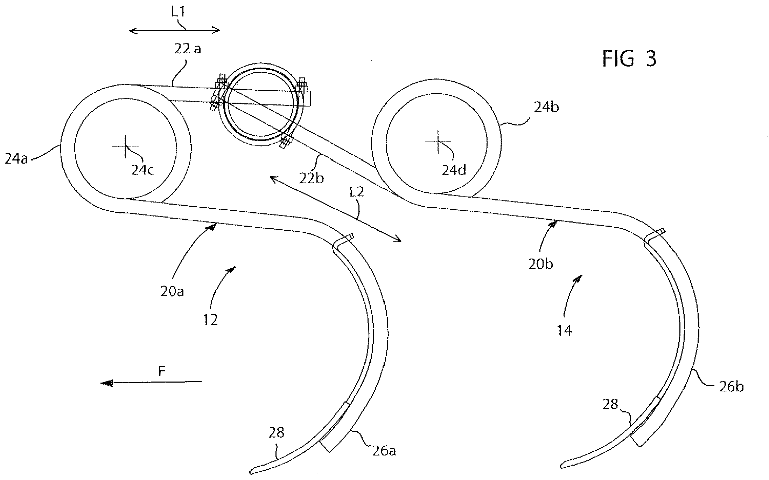

The cultivating tools 12, 14 are arranged at the beams 8, 10 axially displaced by a multiple of the desired row width in the lateral direction and are now described in more detail, reference being made to Figures 2 and 3. In Figure 2, the outer end of the beam is excluded to clarify the attachment of the tools.

The first cultivating tool 12 comprises a bent bar 20a, henceforth denominated tine and preferably having a rectangular cross-section. The tine 20a has an elongate essentially straight fastening portion 22a that extends through the beam 8 in a vertical plane, a springing portion 24a formed as a helical spring, as well as an end portion 26a at which a cultivating point 28 is arranged and attached by a screw joint 32. Above the point 28, a guide rail 30 is arranged and attached by a corresponding screw joint 34. The fastening portion 22a transforms into the springing portion 24a, the same being situated in front of the beam 8 in relation to the working direction.

Correspondingly, the second cultivating tool 12 comprises a bent bar 20b, henceforth denominated tine and preferably having a rectangular cross-section. The tine 20b has an elongate essentially straight fastening portion 22b that extends through the beam 8 in a vertical plane, a springing portion 24b formed as a helical spring, as well as an end portion 26a at which a cultivating point 28 and a guide rail 30 are arranged. The fastening portion 22b transforms into the springing portion 24b, the same being situated in front of the beam 8 in relation to the working direction.

Hence, it follows that the points 28 are situated at any of four given longitudinal positions in spite of only two beams 8, 10 being used for the attachment.

The tines 12, 14 run through holes in the beam and are attached thereto by a detachable fastening device 40 partly surrounding the beam externally and comprising a cramp 42 that surrounds the outer end of the fastening portion 22a, 22b and where the open ends of the cramp 42 run through holes in a plate 44 and are secured thereto by means of nuts 46 that upon tightening press the plate 44 against the fastening portion 22a, 22b.

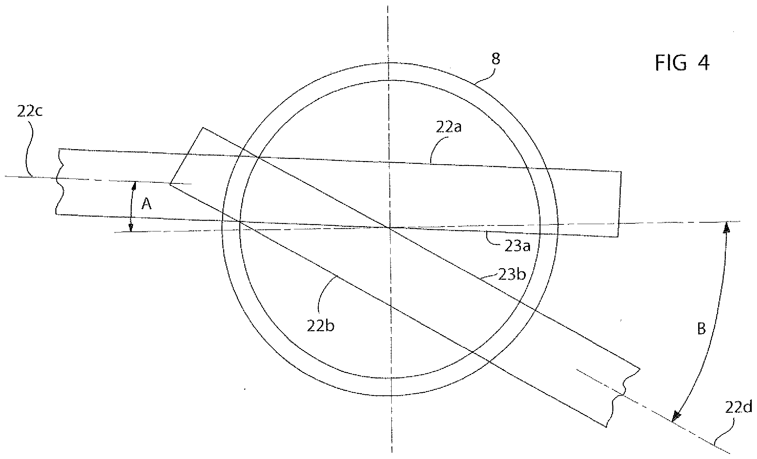

The two fastening portions 22a, 22b have a surface 23a, 23b that coincides with a respective axial plane of the tube through the centre thereof. Accordingly, the diameter of the tube extends in this plane (see Figure 4).

The geometrical relationship in relation to the ground surface between the centres 24c, 24d of the respective springing portion 24a, 24b are essentially identical. The springing portions 24a, 24b are situated vertically underneath the beam. This is because they should be screwed clockwise in the perspective of the figures as seen from the point 28 to avoid undesired compressive stresses and simultaneously give sufficient room for the tines to spring upward.

Here, reference is made to Figure 4. The fastening portion 22a of the first tine 20a extends obliquely downward from the springing portion 24a at a first angle A between the longitudinal axis 22c of the fastening portion 22a and the horizontal plane H within the interval of 1-10°, preferably approx. 3°, while the fastening portion 22b of the second tine 20b extends obliquely upward from the springing portion 24b at a second angle B between the longitudinal axis 22d of the fastening portion 22b and the horizontal plane H within the interval of 20-40°, preferably approx. 30°. Accordingly, the second angle B is greater than the first angle A.

Furthermore, the length of the bar 20a at the springing portion 22a of the first tine 20a is approximately one-and-a-half turn while its length at the springing portion 22b of the second tine 20b is slightly more than one turn. Accordingly, the bar length of the springing portion is longer for the first tine 20a than for the second tine 20b.

The fastening portion 22a of the first tine 20a has a length L1 between the beam and the transition to the springing portion 24a, while the second tine 20b has a corresponding length L2 that is longer than L1.

The lengths of the fastening portions 22a, 22b and springing portions 24a, 24b as well as the position of the point 28 in relation to the beam 8, 10 as well as to the centre 24c, 24d of the springing portions 24a, 24b affect the spring characteristic at the point. The solution described above shows a device where these differences compensate each other and where also strength-wise and geometrical limitations have been taken into consideration so that tines having different longitudinal positions for the point can be fixed to the same beam and where essentially the same movement pattern and spring characteristic of the points are achieved at a given work condition.

The invention may be varied within the scope of the claims. For instance, the shape of the beam and the attachment of the tools to the same may be varied. Furthermore, the shape of the cultivating part of the tools may be varied depending on the desired task. In such cases, this may cause that geometrical positions, angles and lengths have to be somewhat compensated.

## Claims

1. Agricultural machine device comprising at least one transverse beam (8, 10) at which at least two cultivating tools (12, 14) are arranged, which cultivating tools (12, 14) comprise a bent bar (20a, 20b) having an elongate essentially straight fastening portion (22a, 22b) for the attachment to the beam (8, 10), a springing portion (24a, 24b) formed as a helical spring with centres (24c, 24d), as well as an end portion (26a, 26b) at which a cultivating point (28) is arranged, at least one first cultivating tool (12) being arranged so that the springing portion (24a) thereof is situated in front of the beam (8, 10) in relation to the working direction (F) of the agricultural machine and one second cultivating tool (14) being arranged so that the springing portion (24b) thereof is situated behind the beam (8, 10) in relation to said working direction (F), ***characterized in* that** the springing portions (24a, 24b) are situated vertically underneath the beam (8, 10), so that the geometrical shape of the bar (20a, 20b) between the springing portion and the cultivating point (28) is kept equal for the first front tool and the second rear tool, which gives the same movement pattern of the tools in a given work load, and **in that** the fastening portions (22a, 22b) extend through the beam (8, 10) in a vertical plane each, and that a first angle (A) between the longitudinal axis (22c) of the fastening portion (22a) of the first cultivating tool (12) and a horizontal plane (H) differs from a corresponding second angle (B) of the longitudinal axis (22d) of the fastening portion (22b) of the second cultivating tool (14).

2. Device according to claim 1, ***characterized in* that** the beam (8, 10) consists of a circular tube.

3. Device according to claim 2, ***characterized in* that** the respective fastening portion (22a, 22b) has a rectangular cross-section and a surface (23a, 23b) that coincides with a respective axial plane of the tube (8, 10) through the centre thereof.

4. Device according to anyone of the preceding claims, ***characterized in* that** the second angle (B) is greater than the first angle (A).

5. Device according to claim 4, ***characterized in* that** the second angle (B) is 20-40°, preferably approx. 30°, and the first angle (A) is 1-10°, preferably approx. 3°.

6. Device according to claim 4 or 5, ***characterized in* that** the length of the bar (20a, 20b) at the helical spring-shaped portion (24a, 24b) is longer for the first cultivating tool (12) than for the second cultivating tool (14), and that the length (L1, L2) of the bar (20a, 20b) between the helical spring-shaped portion (24a, 24b) and the beam (8, 10) is shorter for the first cultivating tool (12) than for the second cultivating tool (14).

7. Device according to anyone of the preceding claims, ***characterized in* that** the fastening portion (22b) of the second cultivating tool (14) extends obliquely upward from the springing portion (24b) toward the beam (8, 10).

8. Device according to anyone of the preceding claims, ***characterized in* that** the fastening portion (22a) of the first cultivating tool (12) extends obliquely downward from the springing portion (24a) toward the beam (8,10).

9. Device according to anyone of the preceding claims, ***characterized in* that** the cultivating tools (12, 14) are attached to the beam (8, 10) by means of a detachable fastening device (40) partly surrounding the beam (8, 10) externally.

## Patentansprüche

1. Landmaschine, die mindestens einen Querbalken (8, 10) umfasst, an dem mindestens zwei Bodenbearbeitungswerkzeuge (12, 14) angeordnet sind, wobei die Bodenbearbeitungswerkzeuge (12, 14) eine gekrümmte Stange (20a, 20b) umfassen, die einen länglichen, im Wesentlichen geraden Befestigungsabschnitt (22a, 22b) zur Montage an dem Balken (8, 10), einen Federabschnitt (24a, 24b), der als Schraubenfeder mit Mittelpunkten (24c, 24d) ausgebildet ist, und einen Endabschnitt (26a, 26b), an dem eine Bodenbearbeitungsspitze (28) angeordnet ist, aufweist, wobei mindestens ein erstes Bodenbearbeitungswerkzeug (12) so angeordnet ist, dass sich dessen Federabschnitt (24a) in Bezug zu der Fahrtrichtung (F) der Landmaschine vor dem Balken (8, 10) befindet, und ein zweites Bodenbearbeitungswerkzeug (14) so angeordnet ist, dass sich dessen Federabschnitt (24b) in Bezug zu der Fahrtrichtung (F) hinter dem Balken (8, 10) befindet,
**dadurch gekennzeichnet, dass** sich die Federabschnitte (24a, 24b) vertikal unter dem Balken (8, 10) befinden, sodass die geometrische Form des Balkens (20a, 20b) zwischen dem Federabschnitt und der Bodenbearbeitungsspitze (28) für das erste vordere Werkzeug und das zweite hintere Werkzeug gleich bleibt, wodurch den Werkzeugen das gleiche Bewegungsmuster bei einer gegebenen Arbeitslast verliehen wird, und dadurch, dass sich die Befestigungsabschnitte (22a, 22b) jeweils in einer vertikalen Ebene durch den Balken (8, 10) erstrecken, und dass sich ein erster Winkel (A) zwischen der Längsachse (22c) des Befestigungsabschnitts (22a) des ersten Bodenbearbeitungswerkzeugs (12) und einer horizontalen Ebene (H) von einem entsprechenden zweiten Winkel (B) der Längsachse (22d) des Befestigungsabschnitts (22b) des zweiten Bodenbearbeitungswerkzeugs (14) unterschiedet.

2. Vorrichtung nach Anspruch 1, **dadurch gekennzeichnet, dass** der Balken (8, 10) aus einem Rundrohr besteht.

3. Vorrichtung nach Anspruch 2, **dadurch gekennzeichnet, dass** der entsprechende Befestigungsabschnitt (22a, 22b) einen rechteckigen Querschnitt und eine Fläche (23a, 23b), die zu einer entsprechenden axialen Ebene des Rohrs (8, 10) passt, durch dessen Mitte aufweist.

4. Vorrichtung nach einem der vorstehenden Ansprüche,
**dadurch gekennzeichnet, dass** der zweite Winkel (B) größer als der erste Winkel (A) ist.

5. Vorrichtung nach Anspruch 4, **dadurch gekennzeichnet, dass** der zweite Winkel (B) 20-40°, bevorzugt etwa 30° beträgt und der erste Winkel (A) 1-10°, bevorzugt etwa 3° beträgt.

6. Vorrichtung nach Anspruch 4 oder 5, **dadurch gekennzeichnet, dass** die Länge der Stange (20a, 20b) an dem Schraubenfederabschnitt (24a, 24b) bei dem ersten Bodenbearbeitungswerkzeug (12) größer als bei dem zweiten Bodenbearbeitungswerkzeug (14) ist, und dass die Länge (L1, L2) der Stange (20a, 20b) zwischen dem Schraubenfederabschnitt (24a, 24b) und dem Balken (8, 10) bei dem ersten Bodenbearbeitungswerkzeug (12) kleiner als bei dem zweiten Bodenbearbeitungswerkzeug (14) ist.

7. Vorrichtung nach einem der vorstehenden Ansprüche,
**dadurch gekennzeichnet, dass** sich der Befestigungsabschnitt (22b) des zweiten Bodenbearbeitungswerkzeugs (14) von dem Federabschnitt (24b) in Richtung des Balkens (8, 10) schräg nach oben erstreckt.

8. Vorrichtung nach einem der vorstehenden Ansprüche,
**dadurch gekennzeichnet, dass** sich der Befestigungsabschnitt (22a) des ersten Bodenbearbeitungswerkzeugs (12) von dem Federabschnitt (24a) in Richtung des Balkens (8, 10) schräg nach unten erstreckt.

9. Vorrichtung nach einem der vorstehenden Ansprüche,
**dadurch gekennzeichnet, dass** die Bodenbearbeitungswerkzeuge (12, 14) über eine lösbare Befestigungsvorrichtung (40), die den Balken (8, 10) teilweise umgibt, an dem Balken (8, 10) montiert sind.

## Revendications

1. Dispositif de machine agricole, comprenant au moins une poutre transversale (8, 10) sur laquelle au moins deux outils de culture (12, 14) sont agencés, lesdits outils de culture (12, 14) comprenant une barre recourbée (20a, 20b) qui présente une partie de fixation allongée essentiellement droite (22a, 22b) pour la fixation à la poutre (8, 10), une partie de suspension (24a, 24b) formée comme un ressort hélicoïdal, ainsi qu'une partie d'extrémité (26a, 26b) sur laquelle une pointe de culture (28) est agencée, au moins un premier outil de culture (12) étant agencé de telle sorte que la partie de suspension (24a) de celui-ci soit située en face de la poutre (8, 10) par rapport à la direction de travail (F) de la machine agricole et un second outil de culture (14) étant agencé de telle sorte que la partie de suspension (24b) de celui-ci soit située derrière la poutre (8, 10) par rapport à ladite direction de travail (F), **caractérisé en ce que** les parties de suspension (24a, 24b) sont situées verticalement en dessous de la poutre (8, 10) de telle sorte que la forme géométrique de la barre (20a, 20b) entre la partie de suspension et la pointe de culture ((28) soit maintenue identique pour le premier outil avant et le second outil arrière, générant le même modèle de déplacement des outils dans une charge de travail donnée, et **en ce que** les parties de fixation (22a, 22b) s'étendent à travers la poutre (8, 10) dans un plan vertical chacune, et **en ce qu'**un premier angle (A) entre l'axe longitudinal (22c) de la partie de fixation (22a) du premier outil de culture (12) et un plan horizontal (H) diffère d'un second angle correspondant (B) de l'axe longitudinal (22d) de la partie de fixation (22b) du second outil de culture (14) .

2. Dispositif selon la revendication 1, **caractérisé en ce que** la poutre (8, 10) consiste en un tube circulaire.

3. Dispositif selon la revendication 2, **caractérisé en ce que** la partie de fixation respective (22a, 22b) présente une section transversale rectangulaire et une surface (23a, 23b) qui coïncides avec un plan axial respectif du tube (8, 10) à travers le centre de celui-ci.

4. Dispositif selon l'une quelconque des revendications précédentes, **caractérisé en ce que** le second angle (B) est plus grand que le premier angle (A) .

5. Dispositif selon la revendication 4, **caractérisé en ce que** le second angle (B) est compris entre 20° et 40°, de préférence est égal à approximativement 30°, et le premier angle (A) est compris entre 1° et 10°, et de préférence est égal à approximativement 3°.

6. Dispositif selon la revendication 4 ou 5, **caractérisé en ce que** la longueur de la barre (20a, 20b) au niveau de la partie en forme de ressort hélicoïdal (24a, 24b) est plus longue pour le premier outil de culture (12) que pour le second outil de culture (14), et **en ce que** la longueur (L1, L2) de la barre (20a, 20b) entre la partie en forme de ressort hélicoïdal (24a, 24b) et la poutre (8, 10) est plus courte pour le premier outil de culture (12) que pour la second outil de culture (14).

7. Dispositif selon l'une quelconque des revendications précédentes, **caractérisé en ce que** la partie de fixation (22b) du second outil de culture (14) s'étend en oblique vers le haut à partir de la partie de suspension (24b) en direction de la poutre (8, 10).

8. Dispositif selon l'une quelconque des revendications précédentes, **caractérisé en ce que** la partie de fixation (22a) du premier outil de culture (12) s'étend en oblique vers le bas à partir de la partie de suspension (24a) en direction de la poutre (8, 10).

9. Dispositif selon l'une quelconque des revendications précédentes, **caractérisé en ce que** les outils de culture (14, 14) sont attachés à la poutre (8, 10) à l'aide d'un dispositif de fixation détachable (40) qui entoure partiellement la poutre (8, 10) extérieurement.
